# EUROPEAN PATENT APPLICATION

(11) **EP 3 171 283 A1**
(43) Date of publication of application: **24.05.2017**
(21) Application number: 16002327.1
(22) Date of filing: 02.11.2016
(51) Int. Cl.: G06F 17/30

(54) **INFORMATION PROCESSING APPARATUS, FILE MONITORING SYSTEM, CONTROL METHOD OF INFORMATION PROCESSING APPARATUS, A CONTROL PROGRAM, AND RECORDING MEDIUM**

(30) Priority: 20.11.2015 JP 2015228212
(71) Applicant: Canon Kabushiki Kaisha, Ohta-ku Tokyo (JP)
(72) Inventor: Yamazaki, Daisuke, Tokyo (JP)
(74) Representative: WESER & Kollegen

(57) **Abstract**

In a management means (301) of an information processing apparatus (101), a determination means determines a folder satisfying a predetermined condition based on a current date and time. For the folder determined to satisfy the predetermined condition by the determination means, a detection means included in a monitoring processing means (305) detects a change in a file stored in the folder. A display means (303) instructed by the management means (301) notifies a user of a new file by displaying the change in a file detected by the detection means.

## Description

### BACKGROUND OF THE INVENTION

### Field of the Invention

The present invention relates to an information processing apparatus, a file monitoring system, a control method of the information processing apparatus, a control program, and a program.

### Description of the Related Art

A file monitoring technology has been known, which regularly monitors a state of a specific folder and, if a new file is created in the folder, informs a user of a state of the file in the monitoring folder in real time by displaying a message on a screen. Japanese Patent Laid-Open No. 2012-43119 discloses that a new file is detected by receiving an OS event. However, it is essential to notify of an event using a file server in this technology, and this technology cannot be applied to a file system not having such a mechanism.

On the other hand, in Japanese Patent Laid-Open No. 2011-253294, a technology has been introduced, which refers to a list of files or attribute information of the files in a monitoring folder, compares the information with information at a time of last monitoring, detects and notifies of a new file or an updated file from a difference in information. In this case, since a notification function of the file server is not necessary, and the notification function can be realized by referring to the list of files or the attribute information of the files, the technology is highly applicable.

A function to automatically transfer received image data to a transfer destination (for example, a folder on the file server) set in advance using a FAX (G3 FAX or Internet FAX) and the like is known (file transfer). As the file transfer function, there is also a technology to create a sub-folder according to reception conditions (receiving data, transmitting source, or the like) under the transfer destination and to transfer (distribute) a file according to transfer settings.

If the file monitoring and the file transfer are combined and used, it is necessary to monitor even subordinate folders of the transfer destination when monitoring a file distributed by the file transfer.

However, in a method of regularly accessing a monitoring folder and referring to information under the folder as shown in Japanese Patent Laid-Open No. 2011-253294, the number of sub-folders under the monitoring folder or the number of files stored in each folder is increased according to a configuration under the monitoring folder. In this manner, if a large number of sub-folders are to be monitored, this causes lowering of performance and the like due to an increased processing load or network load of the client PC or the file server.

### SUMMARY OF THE INVENTION

The present invention provides an information processing apparatus capable of realizing file monitoring including a sub-folder while reducing a processing load.

The present invention in its first aspect provides an information processing apparatus as specified in claims 1 to 9. The present invention in its second aspect provides a control method of a file monitoring system as specified in claim 10. The present invention in its third aspect provides a control method of an information processing apparatus as specified in claim 11. The present invention in its fourth aspect provides a control program of an information processing apparatus as specified in claim 12. The present invention in its fifth aspect provides a recording medium of an information processing apparatus as specified in claim 13.

The information processing apparatus of the present invention includes a determination unit configured to determine a folder satisfying a predetermined condition based on a current date and time, a detection unit configured to detect a change in a file stored in the folder determined to satisfy the predetermined condition by the determination unit, and a notification unit configured to notify of the change in the file detected by the detection unit.

Further features of the present invention will become apparent from the following description of exemplary embodiments with reference to the attached drawings.

### BRIEF DESCRIPTION OF THE DRAWINGS

Fig. 1 is a view showing an example of a system configuration.
Fig. 2 is a diagram showing an example of a hardware configuration.
Fig. 3 is a diagram showing an example of a software configuration of an information processing apparatus (101).
Fig. 4 is a diagram showing an example of a monitoring setting flow of a file monitoring application.
Fig. 5 is a diagram showing an example of a regular monitoring flow of the file monitoring application.
Fig. 6 is a diagram showing an example of the regular monitoring flow of the file monitoring application.
Figs. 7A and 7B are diagrams showing an UI example of the file monitoring application.
Figs. 8A and 8B are diagrams showing an UI example of the file monitoring application.
Fig. 9 is a diagram showing an example of the monitoring setting flow of the file monitoring application.
Fig. 10 is a diagram showing an example of the regular monitoring flow of the file monitoring application.
Fig. 11 is a diagram showing an example of the regular monitoring flow of the file monitoring application.
Fig. 12 is a diagram showing an example of the regular monitoring flow of the file monitoring application.
Fig. 13 is a diagram showing an example of the regular monitoring flow of the file monitoring application.
Fig. 14 is a diagram showing an example of a first monitoring flow of the file monitoring application.
Fig. 15 is a diagram showing an example of the first monitoring flow of the file monitoring application.

### DESCRIPTION OF THE EMBODIMENTS

### (First Embodiment)

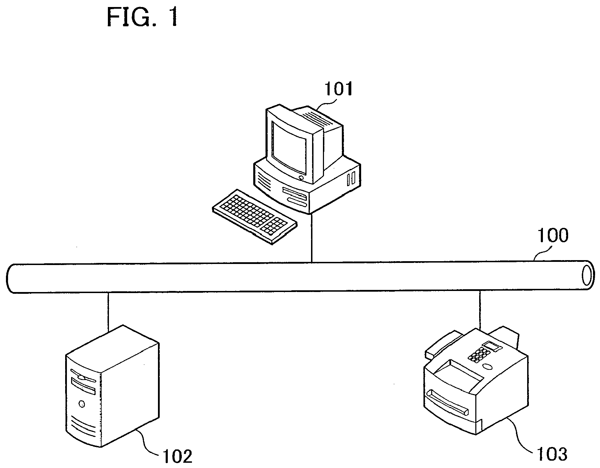

Fig. 1 is an overall view of a file monitoring system.

A client PC 101, a file server 102, and a multifunction peripheral (MFP) 103 are communicably connected to one another on a local area network (LAN) 100. The client PC 101 is an example of an information processing apparatus. The file server 102 is an example of an external server. The MFP 103 is an example of an image processing apparatus. Here, the whole, including the client PC 101 and the file server 102, is referred to as a file monitoring system. The MFP 103 is connected to the public switched telephone network (PSTN) (not shown) and performs FAX communication of image data with a FAX device (not shown).

The MFP 103 converts received FAX data into a file in a format such as a portable document format (PDF) or a tagged image file format (TIFF). Then, it is possible to transfer the converted file to a transfer destination on the file server 102, which is specified in advance. In addition, it is possible to create a sub-folder under the transfer destination specified by transfer settings and to transfer the file under the sub-folder. For example, if sorting is set by "receiving date" in the transfer settings, a folder for received data (YYYY (year) MM (month) DD (date)) is created under the transfer destination and the file is transferred thereto. In the present example, a configuration is shown in which the MFP 103 stores the received FAX data in the file server 102 as the file; however, the embodiment is not particularly limited to the MFP 103, and the file may be stored by other information processing apparatuses connected onto the LAN 100.

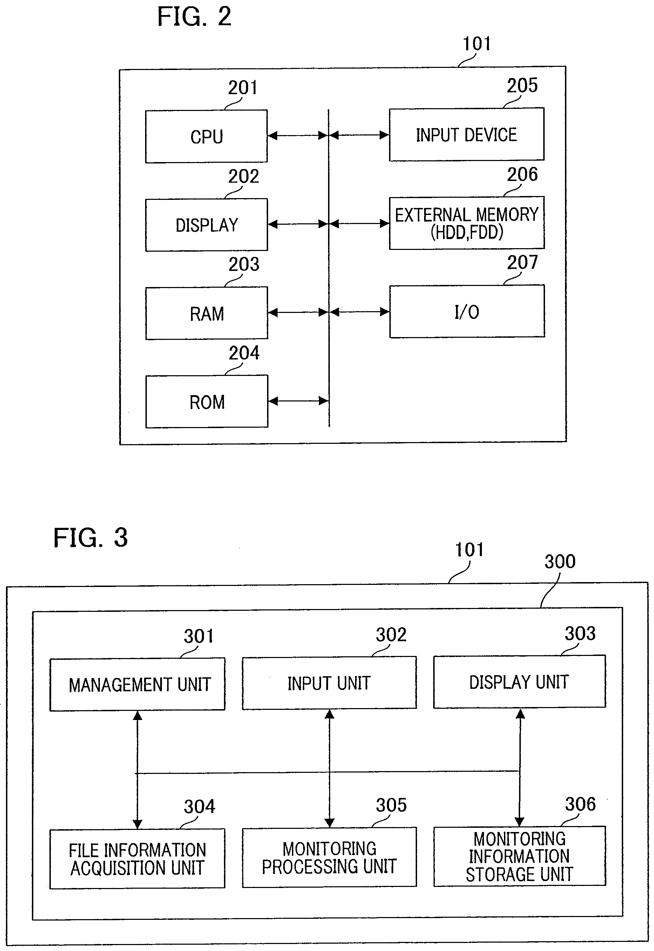

Fig. 2 is a hardware configuration diagram of a client PC 101. The client PC 101 includes a CPU 201, a display 202, a RAM 203, a ROM 204, an external memory 206, and an input/output (I/O) 207.

The CPU 201 performs program execution. The display 202 is a display device for providing a user with visual output information feedback. The RAM 203, the ROM 204, and the external memory 206 such as a hard disk drive (HDD) or a floppy disk drive (FDD), which are storage devices, store various types of programs or execution information, in the embodiment. An input device 205 is an input device such as a keyboard or a pointing device for receiving a user operation input. The I/O 207 is an interface device for communicating with an external device. The client PC 101 communicates with the file server 102 or the MFP 103 through the I/O 207.

In processing described in the present embodiment, a program saved in the ROM 204 or the external memory 206 is loaded onto the RAM 203, and is executed by the CPU 201 to be realized.

Fig. 3 is a diagram showing an example of a software configuration of a file monitoring application 300 executed by the client PC 101.

The file monitoring application 300 is installed in the client PC 101, and the program is stored in the ROM 204 or the external memory 206 of the client PC 101. That is, the CPU 201 loads and executes the program in the RAM 203, and thereby functions of the file monitoring application 300 and processing according to a flowchart to be described are realized. The file monitoring application 300 includes a management unit 301, an input unit 302, a display unit 303, a file information acquisition unit 304, a monitoring processing unit 305, and a monitoring information storage unit 306.

The management unit 301 controls the file monitoring application 300, and performs instruction and management for each unit to be described below.

The input unit 302 receives an input operation of a user and delivers the input request to the management unit 301 through a graphical user interface (GUI) of the file monitoring application 300 displayed by the display unit 303.

The display unit 303 displays the GUI of the file monitoring application 300 in accordance with an instruction from the management unit 301.

The file information acquisition unit 304 acquires file and folder information stored in the file server 102 through the I/O 207. As an acquisition unit for the file and folder information, a protocol such as server message block (SMB) or web-based distributed authoring and versioning (WebDAV) is used. In addition, units such as a Web service and the like provided by the file server 102 may be used. A unit used in data access on the file server 102 is a general unit as described above and is not particularly limited.

The monitoring processing unit 305 compares file and folder information in a monitoring folder acquired by the file information acquisition unit 304 with file and folder information at a time of a last monitoring execution stored by the monitoring information storage unit 306 on a regular basis to determine a new file.

The monitoring information storage unit 306 stores setting information of the monitoring folder and file and folder information in the monitoring folder acquired by monitoring processing in the external memory 206. The setting information of the monitoring folder is information about settings for defining a monitoring operation of the file monitoring application 300, and the file monitoring application 300 executes the monitoring processing according to the settings. The file and folder information in the monitoring folder is information used in the determination of a new file described above. The setting information of the monitoring folder and the file and folder information in the monitoring folder are stored on the external memory 206 as, for example, a file (not shown) in an extensible markup language (XML) format.

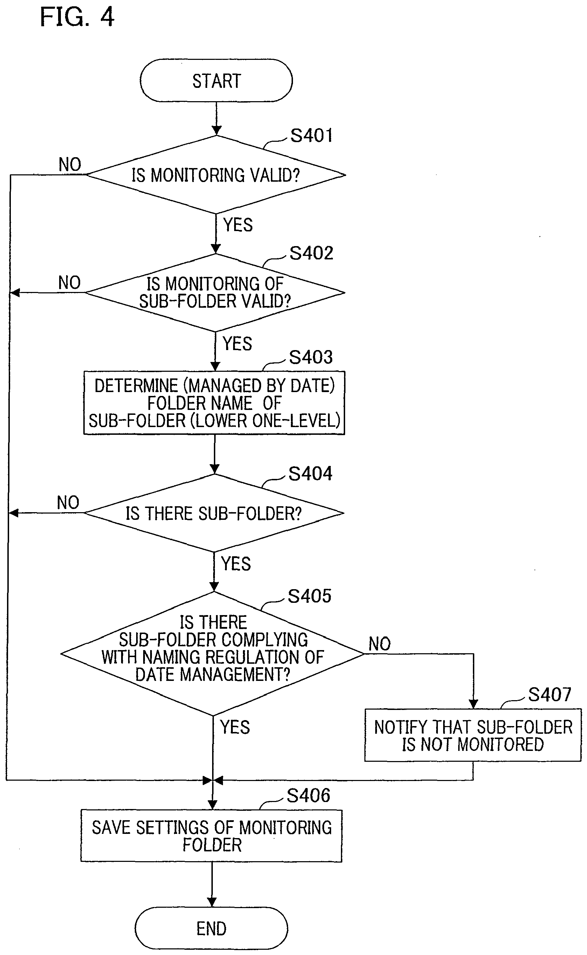

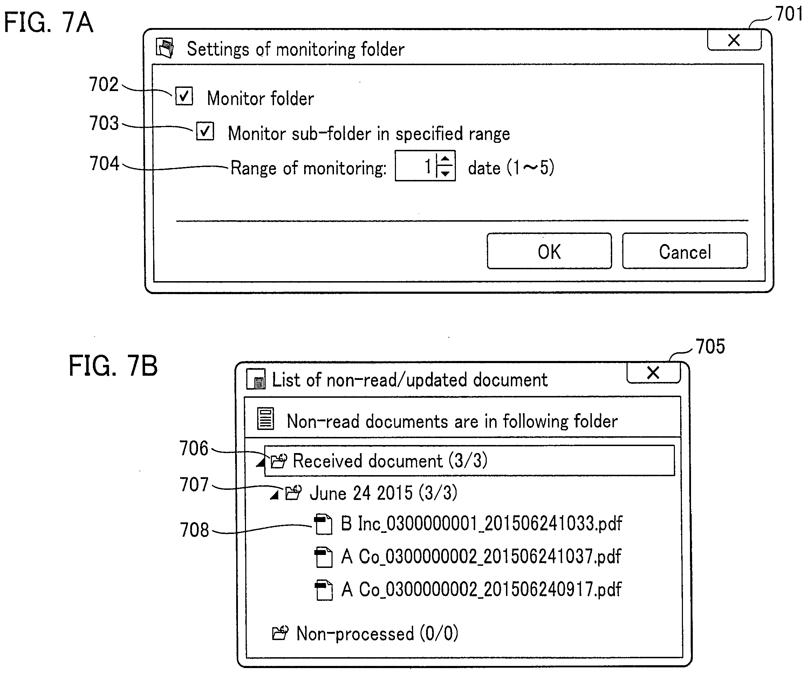

Fig. 4 is a diagram which shows an example of a flowchart related to a process of monitoring setting by the file monitoring application 300. If a setting operation (press on an OK button) is executed by a user on a monitoring folder setting screen 701 of Fig. 7A displayed on the display unit 303, the input unit 302 detects the operation and notifies the management unit 301 of the operation, thereby starting the processing. In a case of operation stop (press on a cancellation button), processing of this flow is not performed.

Here, the monitoring folder setting screen 701 will be described. Fig. 7A is a diagram schematically showing the GUI of the file monitoring application 300, which is adaptable in the embodiment.

The monitoring folder setting screen 701 is a setting screen of a monitoring folder and is for specifying a monitoring operation of the monitoring folder. Setting information set in the present screen is stored as settings of the monitoring folder by the monitoring information storage unit 306. Monitoring processing is executed in accordance with the settings at a time of monitoring processing of the file monitoring application 300. A monitoring setting 702 is a setting for whether to monitor a specified folder, and if a check box is set to ON, the specified folder is monitored, and, if check box is set to OFF, the specified folder is not monitored. A sub-folder monitoring setting 703 is a setting for whether to monitor a sub-folder in a specified range (shown in a range setting 704) under the specified folder. If a check box is set to ON, the sub-folder is monitored, and if the check box is OFF, the sub-folder is not monitored. The range setting 704 is a setting for specifying a range (a predetermined number of days) of dates to be monitored in a case of monitoring the sub-folder. If the sub-folder is monitored, monitoring is executed on folders of a current date to a date specified in the range setting 704 in the sub-folder.

Referring back to Fig. 4, the management unit 301 which has received a notification from the input unit 302 which detected a user operation determines whether monitoring is valid by referencing a setting of the monitoring setting 702 on the monitoring folder setting screen 701 in S401. If monitoring of the monitoring folder is valid, the procedure proceeds to S402, and if monitoring is not valid, the procedure proceeds to S406 to save setting information.

The management unit 301 determines monitoring validity by referencing a setting of the sub-folder monitoring setting 703 on the monitoring folder setting screen 701 in S402. If monitoring of a sub-folder in a specified range is valid, the procedure proceeds to S403, and if the monitoring is not valid, the procedure proceeds to S406.

In S403, if monitoring of a sub-folder is valid, it is determined whether the sub-folder is suitable for monitoring by referencing the sub-folder of the specified folder. Specifically, the management unit 301 instructs the file information acquisition unit 304 to acquire a list of sub-folders one level under the specified folder. As the list of sub-folders at this time, a list of character strings showing folder names or paths of the sub-folders is acquired. The management unit 301 determines whether the folder names are managed by date by referencing the acquired list. It is checked whether the folder names are given according to a specific naming convention such as "YYYY (year) MM (month) DD (date)", where Y, M, and D are numbers representing year, month, and date, respectively. This naming convention is assumed to be defined as a set value of the file monitoring application 300 in advance to comply with a naming convention given by the MFP 103. Besides, several ways of expressions representing "date" (for example, YYYY/MM/DD, YYYYMMDD, and the like) are defined and determination processing may be performed to coincide with the ways of date expression.

In S404, the procedure proceeds to S405 if it is determined that the sub-folder is present in the monitoring folder, as a result of the processing in S403. On the other hand, if it is determined that no sub-folder is present, this is regarded as an initial state in which a file is not yet created in the monitoring folder, and the procedure proceeds to S406 without a notice such as a warning.

In S405, as a result of the determination processing in S403, if it is determined that there is a sub-folder managed by date, the procedure proceeds to S406. The procedure proceeds to S407 if it is determined that there is no sub-folder managed by date in S405.

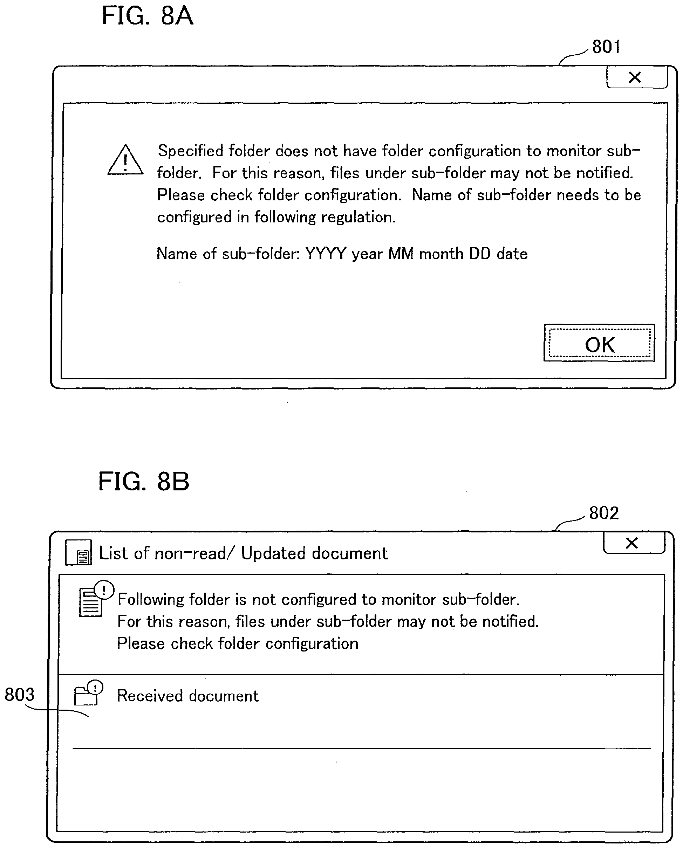

In S407, the management unit 301 instructs the display unit 303 to display a warning screen 801 shown in Fig. 8A and notifies a user of a possibility that a sub-folder is not monitored, and the procedure proceeds to S406.

Here, Fig. 8A is a diagram schematically showing a GUI at a time of warning display of the file monitoring application 300 which is adaptable in the present embodiment. The warning screen 801 is a warning screen displayed at a time of monitoring setting. Monitoring of a sub-folder is effectively set at the time of monitoring setting, but if a sub-folder of the specified folder is not configured (date management) to be monitored, the warning screen is a screen for warning of a possibility that monitoring is not performed under the sub-folder.

Returning to the description of Fig. 4, in S406, the management unit 301 instructs the monitoring information storage unit 306 to store setting information of the monitoring folder.

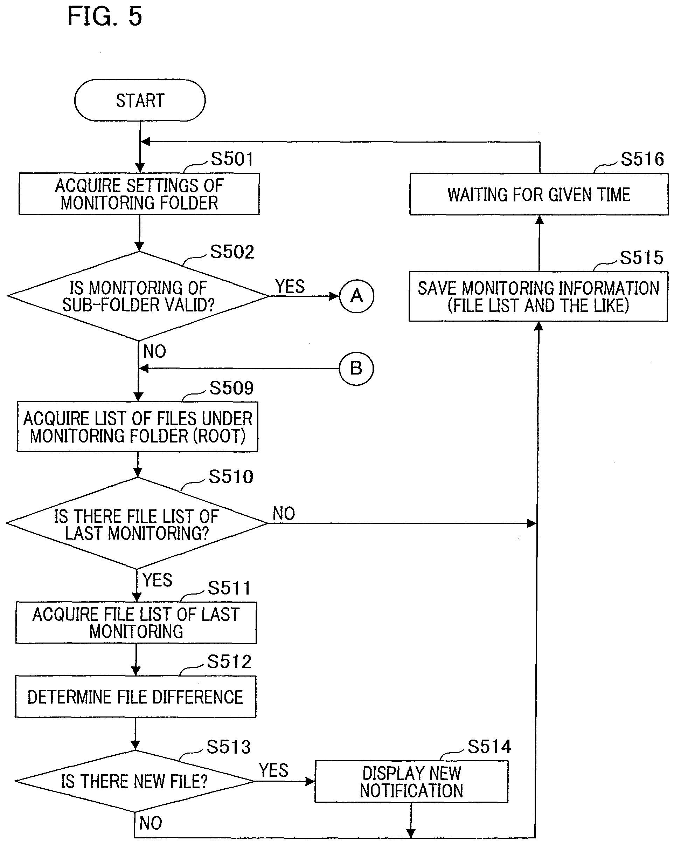

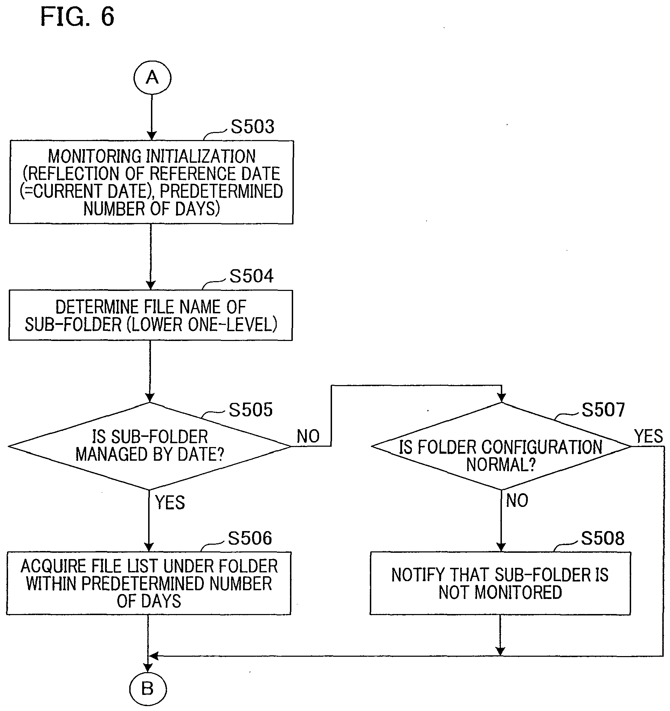

Figs. 5 and 6 are diagrams each showing an example of a flowchart according to processing of regular monitoring of the file monitoring application 300.

The processing is executed at given intervals after a start-up of the file monitoring application 300. Specifically, the management unit 301 measures an elapsed time after monitoring execution and starts the processing if a given time elapses.

In S501, the management unit 301 instructs the monitoring information storage unit 306 to acquire setting information of a monitoring folder.

In S502, the management unit 301 determines whether monitoring of a sub-folder is valid by referencing the setting information of the monitoring folder. Here, if monitoring of a sub-folder is valid, the procedure proceeds to S503. If the monitoring of a sub-folder is not valid, the procedure proceeds to S509, and the monitoring processing is executed only under the monitoring folder (root).

In S503, the management unit 301 initializes the monitoring operation according to the setting information of the monitoring folder. Specifically, referring to a current date and time of a client PC, the date is set as a reference date. In addition, referring to a range (a predetermined number of days) of dates to be monitored among the setting information of the monitoring folder, a range of a predetermined number of days from the reference date is reflected as "to be monitored".

Next, in S504, the management unit 301 instructs the file information acquisition unit 304 to acquire a list of sub-folders one level under a specified folder. Specifically, a list of character strings showing folder names or paths of the sub-folders is acquired. The management unit 301 determines whether the folder names are managed by date by referencing the acquired list (the same as in S403 of Fig. 4). In addition, it is determined whether there is a folder within a predetermined number of days. Specifically, it is checked whether there is a folder as a folder within the predetermined number of days from the reference date described above by comparing a date indicated by a folder name (YYYY (year) MM (month) DD (date)) with a range of the predetermined number of days from the reference date.

In S505, if the management unit 301 determines whether the sub-folders are managed by date by referencing a result of S504, the procedure proceeds to S506 to execute monitoring processing. Otherwise, the procedure proceeds to S507 to check configurations of the sub-folders.

In S506, the management unit 301 instructs the file information acquisition unit 304 to acquire a list of files under the folder within the predetermined number of days. Information to be acquired herein refers to file names or path list information of the files under the folder, and is held in a temporary area (not shown) of the file monitoring application 300 program to be referred to in difference determination processing to be described below.

In S507, the management unit 301 determines whether a configuration of a sub-folder is normal (configured to be monitored) by referencing a result of S504. Here, if a sub-folder is not created (initial state), the sub-folder is determined to be normal and the procedure proceeds to S509. This is because a sub-folder cannot be monitored at a time of monitoring in some cases even if the sub-folder is set to be managed by date. On the other hand, if there is a sub-folder but there is no folder managed by date, a folder configuration is regarded not to be normal (configured not to be monitored), and the procedure proceeds to S508 to display a warning.

In S508, the management unit 301 instructs the display unit 303 to display a warning screen 802 of Fig. 8B, which notifies that the sub-folder is not monitored.

Here, a warning screen 802 of Fig. 8B is a screen for warning of a possibility that monitoring of a sub-folder is not be performed if the sub-folder of a monitoring folder is not configured to be monitored (date management), even though monitoring of the sub-folder is valid in monitoring processing at a time of regular monitoring. A folder name display area 803 shows folder names of the monitoring folder corresponding thereto. Since the monitoring processing is processed in the background, if the warning is displayed in the monitoring processing, an example in which a warning is displayed by pop-up notification so as not to interfere with a current operation of a user is shown.

Returning to the description of Fig. 5, the management unit 301 instructs the file information acquisition unit 304 to acquire a list of files under the monitoring folder (root) in S509. The file list refers to file names or path list information in the same manner as described above. Here, files under the monitoring folder (root) are monitored in the embodiment, but only files under a sub-folder may be configured to be monitored.

Next, the management unit 301 checks whether there is information on files under the monitoring folder at a time of last monitoring. Specifically, the management unit 301 queries the monitoring information storage unit 306, references file and folder information in the monitoring folder, and checks whether there is file list information under a current monitoring folder. If there is no information at the time of last monitoring, the procedure proceeds to S515 to store the file list information acquired in S506 and S509 as information for reference at a time of next monitoring.

If it is determined that there is information at the time of last monitoring, the procedure proceeds to S511 to acquire the file list information under the monitoring folder stored by the monitoring information storage unit 306. The information also includes file list information under a sub-folder within a predetermined number of days. Subsequently, the management unit 301 delivers current file list information acquired in S506 and S509 and last file list information acquired in S511 to the monitoring processing unit 305.

In S512, the monitoring processing unit 305 compares differences between the current and last file list information and detects a change in the file list information, thereby extracting information on a new file, that is, a newly added file.

In S513, the management unit 301 references a processing result of S512, and, if a new document can be checked to be present, the procedure proceeds to S514.

In S514, the management unit 301 instructs the display unit 303 to display a new-file notification shown on a new-file notification screen 705 of Fig. 7B.

Here, Fig. 7B is a diagram schematically showing the GUI of the file monitoring application 300 which is adaptable in the embodiment. The new-file notification screen 705 displays a new file if there is the new file as a result of the monitoring processing shown in Figs. 5 and 6, thereby notifying a user of the new file. The new-file notification screen 705 displays names of a monitoring folder area 706, a sub-folder area 707 in the monitoring folder, and a new file area 708 and displays which monitoring folder or sub-folder has a new file for easy recognition by a user. Moreover, the new-file notification screen 705 receives an operation from the user. For example, by receiving selection and execution operations for a folder or a file of the new-file notification screen 705, it is possible to open, for example, a selected file or folder according to the received operation (not shown).

Returning to the description of Fig. 5, the procedure proceeds to S515 after new-file notification is displayed, and the monitoring information storage unit 306 stores monitoring information. Specifically, the file list information acquired in S506 and S509 and execution time of monitoring are stored as information to be referenced at a time of next monitoring.

In S516, the management unit 301 waits for processing for a given time. The waiting time is set to a degree that a user can be notified as much as possible in real time as long as there is not too much load on the CPU 201. As an example, the management unit waits for about one minute. After the given time elapses, the management unit 301 resumes the processing and executes the monitoring processing from S501.

According to the embodiment, in file monitoring to regularly access a folder, it is possible to realize monitoring including monitoring of a sub-folder while reducing a processing load by limiting sub-folders to be monitored according to a specific condition.

### (Second Embodiment)

In the first embodiment, an example in which there are sub-folders managed by date at a first lower level of a monitoring folder is shown, but a configuration in which there are sub-folders managed by date at a second lower level of the monitoring folder is also considered. In a case of such a configuration, it is needed to reference information in a folder for each of the sub-folders of the first lower level, and if the number of the sub-folders is large, the processing load is increased. In the embodiment, even if sub-folders managed by date are configured to be at the second lower level, monitoring can be performed if it is considered to suppress the processing load by limiting the sub-folders to be monitored, otherwise, monitoring cannot be performed and it is recommended to review a folder configuration.

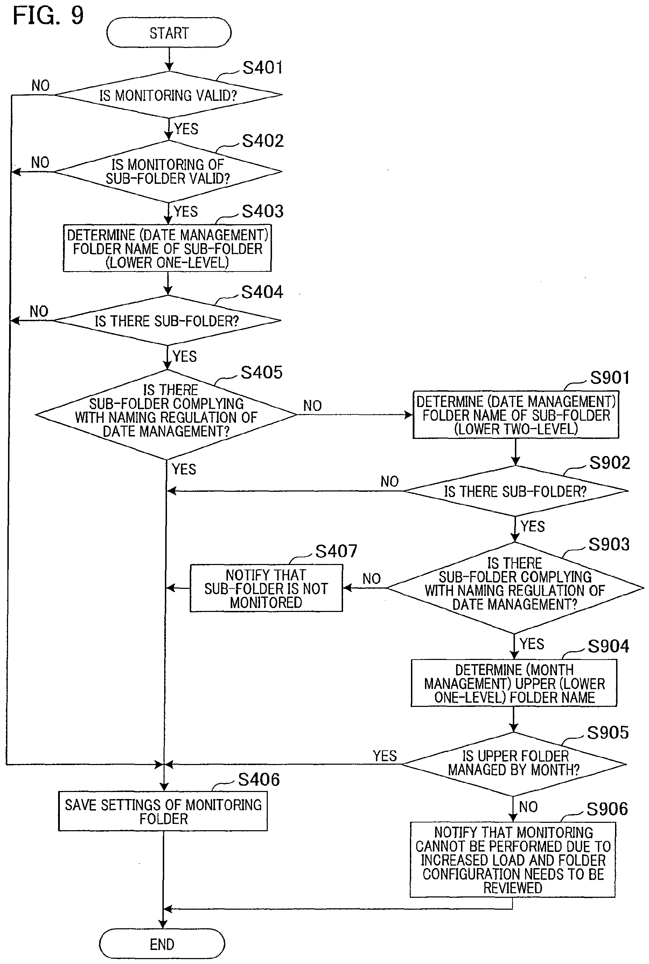

Hereinafter, using flowcharts of Figs. 9 to 11, a difference from the first embodiment will be described. Processing unless otherwise specified is all the same as in the first embodiment.

Fig. 9 is a diagram showing an example of a flowchart related to a process of monitoring setting of the file monitoring application 300. In the same manner as in Fig. 4, if a user executes a setting operation (press an OK button) on the monitoring folder setting screen 701, the input unit 302 detects the operation and notifies the management unit 301 of it, and thereby the processing is started. Processing to check whether monitoring folders and monitoring sub-folders are valid from a processing start (S401, S402) and to determine a folder name of a sub-folder (first level lower) (S403 to S405) is the same as in Fig. 4. In addition, processing to notify that a sub-folder is not monitored (S407) and to save settings of a monitoring folder (S406) is also the same as in Fig. 4.

If a sub-folder (first lower level) is determined not to be managed by date in S405, the procedure proceeds to processing of S901.

In S901, the management unit 301 instructs the file information acquisition unit 304 to acquire a list of sub-folders (second lower level) one layer under the sub-folder (first lower level). More specifically, a list of character strings showing folder names or paths of the sub-folders (second lower level) is acquired, and thereby it is determined whether the folder name is managed by date (specific determination processing is the same as in S403).

In S902, if it is determined that there is no sub-folder (second lower level) as a result of S901, it is regarded as an initial state in which a file is not created in a monitoring folder, and the procedure proceeds to S406 without a notice such as a warning.

In S902, if it is determined that there is a sub-folder (second lower level) as a result of S901, the procedure proceeds to S903. In S903, if it is determined that there is a sub-folder managed by date as a result of determination processing in S901, the procedure proceeds to S904. If it is determined that there is no sub-folder managed by date, the procedure proceeds to S407 to notify a user that a sub-folder may not be monitored by displaying the warning screen 801 shown in Fig. 8A on the display unit 303.

In S904, it is determined whether an upper folder (first lower level of the monitoring folder) is managed by month. The management unit 301 references the list of sub-folders at the first lower level which is acquired in the processing in S403, and determines whether the folder name is managed by month. Specifically, it is checked whether the folder name is given a name according to a specific naming convention (for example, "YYYY (year) MM (month)" (Y and M are numbers each representing a year and a month). This naming convention is defined as a set value of the file monitoring application 300, set in advance to comply with a naming convention given by the MFP 103. In addition, representation (for example, YYYY/MM, YYYYMM, and the like) for representing a "month" is defined in plural ways and processing to determine whether the representation complies with the naming convention may be performed.

Next, in S905, if it is determined that there is a sub-folder (first lower level) managed by month as a result of S904, monitoring is regarded as possible, and the procedure proceeds to S406. If there is no sub-folder (a first level) managed by month, the procedure proceeds to S906.

In S906, the management unit 301 instructs the display unit 303 to notify that monitoring cannot be performed due to an increased load of monitoring processing and to recommend reviewing a folder configuration. In this case, monitoring cannot be performed and the procedure is finished without saving settings.

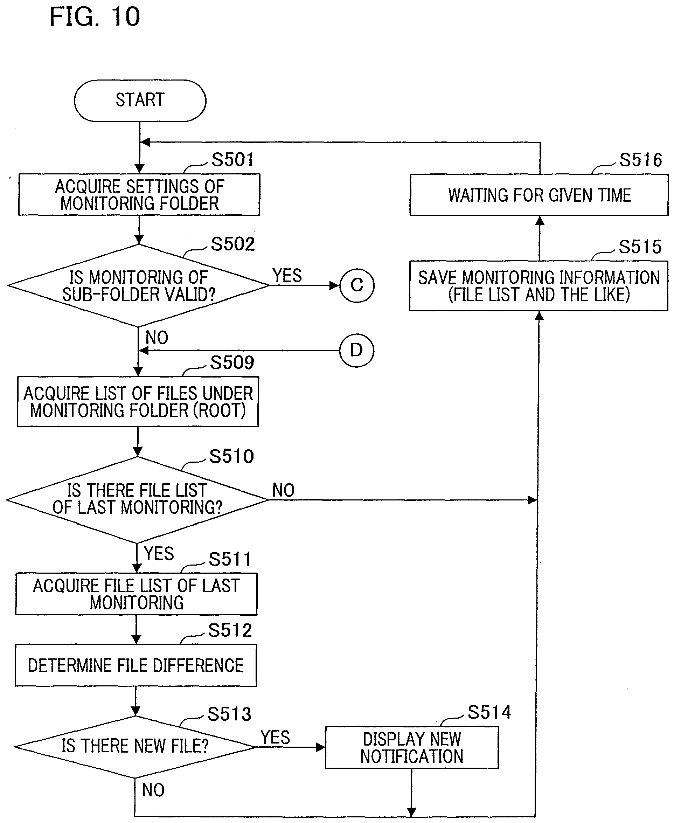

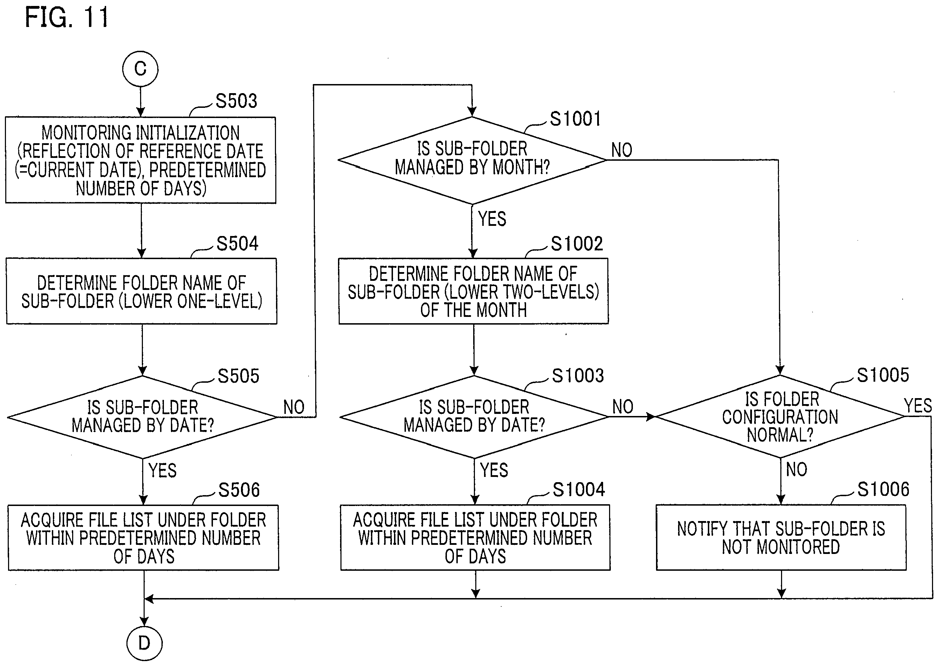

Figs. 10 and 11 are diagrams each showing an example of a flowchart related to regular monitoring processing of the file monitoring application 300. The processing is executed at regular intervals after a start-up of the file monitoring application 300. Specifically, the management unit 301 measures an elapsed time after monitoring is executed and starts the processing if a given time is elapsed. Acquisition of setting information of the monitoring folder from the start of the processing (S501), checking whether monitoring of a sub-folder is valid (S502), and checking of a sub-folder and acquisition of a file list from initialization processing if the monitoring is valid (S503 to S506) are the same as in Figs. 5 and 6.

In the determination processing of sub-folders (first lower level) in S505, if a folder is determined to be managed by date, the procedure proceeds to S1001. In S1001, it is determined whether the sub-folder (first lower level) is managed by month. Specifically, the determination processing is the same as in S904 of Fig. 9. If the sub-folder is determined to be managed by month, the procedure proceeds to S1002, and if the sub-folder is not determined to be managed by month, the procedure proceeds to S1005.

In S1002, the management unit 301 instructs the file information acquisition unit 304 to acquire a list of sub-folders (second lower level) one level under the sub-folder (first lower level). Specifically, a list of character strings showing folder names or paths of the sub-folders (second lower level) is acquired to determine whether the folder names are managed by date. Specific determination processing is the same as in S403.

In S1003, the management unit 301 references a result of S1002, and, if the sub-folder (second lower level) is determined to be managed by date, the procedure proceeds to S1004 to execute the monitoring processing. Otherwise, the procedure proceeds to S1005 to check a configuration of the sub-folder.

In S1004, the management unit 301 instructs the file information acquisition unit 304 to acquire a file list under a folder within a predetermined number of days of the sub-folder (first lower level) managed by month. Information acquired herein shows file names or path list information of files present under the folder, and is held in a temporary area (not shown) of a program of the file monitoring application 300 for reference in difference determination processing to be described below.

In S1005, the management unit 301 references a result of S1002 and determines whether a configuration of a folder is normal. Here, if the folder is not created (initial state), the procedure proceeds to S509. This is because the folder is not created at a time of monitoring in some cases even if a normal folder configuration in which sub-folders (first lower level) are managed by month and sub-folders (second lower level) are managed by date is set. On the other hand, even if there is a folder, except the folder configuration in which sub-folders (first lower level) are managed by month and sub-folders (second lower level) are managed by date, the other folder configurations are regarded as not normal, and the procedure proceeds to S1006. In S1006, the warning screen 802 of Fig. 8B which warns that a sub-folder may not be monitored is displayed.

In the same manner as in S509 and subsequent processing of Fig. 5, determination and notification processing of a new file is executed by detecting a change in a file based on a difference between the acquired file list described above and a file list at a time of last monitoring.

As described above, in the embodiment, even in a configuration in which sub-folders managed by date are at a second lower level, monitoring is possible if the processing load is suppressed by limiting sub-folders to be monitored, otherwise, monitoring is not possible and it is recommended to review a folder configuration. According to the embodiment, even in the configuration in which the sub-folders managed by date are at a second lower level, it is possible to realize monitoring including monitoring of a sub-folder while reducing a processing load.

### (Third Embodiment)

A folder name of the date depends on the time of a system (system to transfer a file) to generate a folder in some cases (MFP103 in the present example). Therefore, a difference in time between the MFP 103 and the client PC 101 to operate the file monitoring application 300 may occur. In this case, a file transferred in the vicinity of a date change may be stored in a folder of a next day (time of the MFP 103 is progressing) or a previous day (time of the MFP 103 is delayed) based on a client PC. Since such a case is not considered in the first embodiment and the second embodiment, unexpected operations such as no notification or delayed notification may occur. Since such a configuration is considered in the embodiment, if time at a time of monitoring execution is in the vicinity of a date change, monitoring including monitoring of folders of the previous day and the next day is executed.

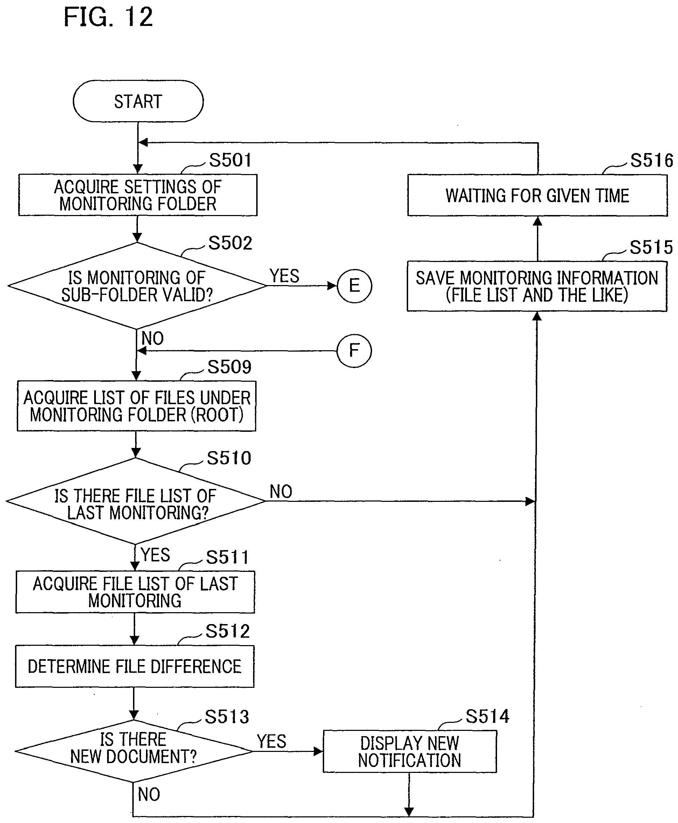

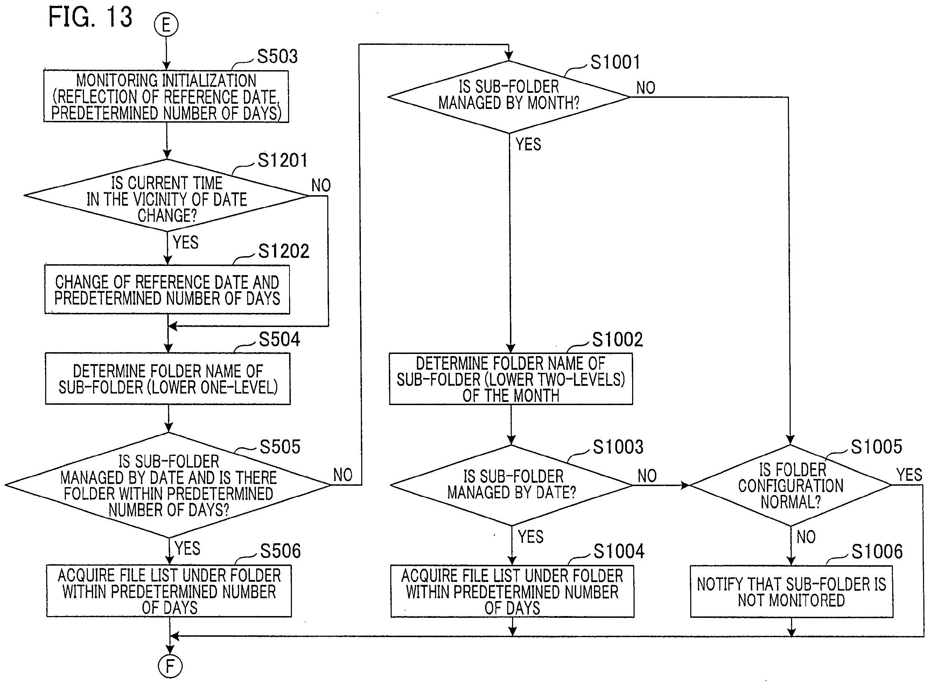

Hereinafter, using flowcharts of Figs. 12 and 13, a difference from the second embodiment will be described. Processing unless otherwise specified is all the same as in the second embodiment.

Figs. 12 and 13 are diagrams each showing an example of a flowchart related to regular monitoring processing of the file monitoring application 300. The processing is executed at regular intervals after the start of the file monitoring application 300. Specifically, the management unit 301 measures an elapsed time after monitoring execution and starts the processing if a given time elapses. In this flow, it is determined whether a current time is in the vicinity of a date change between initialization (S503) of monitoring processing and subsequent monitoring processing (S504 and subsequent processing therefrom), and if the current time is in the vicinity of a date change, a reference date and a value of a predetermined number of days in S503 are changed so that a folder of a previous day or a next day is also monitored. The followings describe the processing in detail.

After the initialization of monitoring processing in S503, the management unit 301 acquires a current time of the client PC 101 in S1201. Specifically, by querying an OS (operating system), the management unit acquires a value of the current time managed by the OS. It is determined whether an acquired time is in the vicinity of a date change. In this determination, it is determined whether the current time is in a period defined in advance from a date change time (0:00). Hereinafter, description will be provided using a case of 30 minutes as an example. That is, in the determination herein, it is determined whether the period is between 23:30 and 0:30, and, if between 23:30 and 0:30, the period is set to the vicinity of a date change. The period is a value predetermined as a set value of the application, and may be changed by a user according to settings and the like. If the current time is determined to be in the vicinity of a date change, the procedure proceeds to S1202. If the current time is not determined to be in the vicinity of a date change, the procedure proceeds to S504.

In S1202, the management unit 301 changes the reference date and the predetermined number of days of the monitoring processing according to the current time. When a time of the MFP 103 progresses while a time of the client PC 101 is before a date change (23:00 to 23:59), a file is likely to be transferred to a folder of a next day. For this reason, if the acquired current time of an OS is before a date change (23:00 to 23:59), the reference date is set to the next day and one day is added to the predetermined number of days. For example, if a set value of the predetermined number of days is set to one day in a case of the current day June 29, a next day June 30 is set to a reference, and June 30 and June 29 which include the next day and the current day are monitored. A file may be transferred to a folder of a previous day. In addition, if the time of the MFP 103 is delayed while the time of the client PC 101 is after a date change (0:00 to 0:30), the file may be transferred to a folder of a previous day. For this reason, if the acquired time of OS is after a date change (0:00 to 0:30), the predetermined number of days is increased by one. For example, if the set value of the predetermined number of days is set to one day in a case of the current day June 30, June 30 and June 29 which includes the previous day are monitored.

According to the embodiment, even if the time at the time of monitoring execution is in the vicinity of a date change, it is possible to perform monitoring without being affected by a difference in set time between an information processing apparatus and an image processing apparatus.

### (Fourth Embodiment)

In the first embodiment and the second embodiment, the file monitoring application 300 performs processing during start-up and it is not considered that the file monitoring application 300 is not started. Therefore, it is considered that a user cannot recognize a file stored while the file monitoring application 300 is not started. In the embodiment, such a configuration is considered, and monitoring processing to detect and notify of a file added since after a last monitoring execution only once is executed at the start-up of the file monitoring application 300.

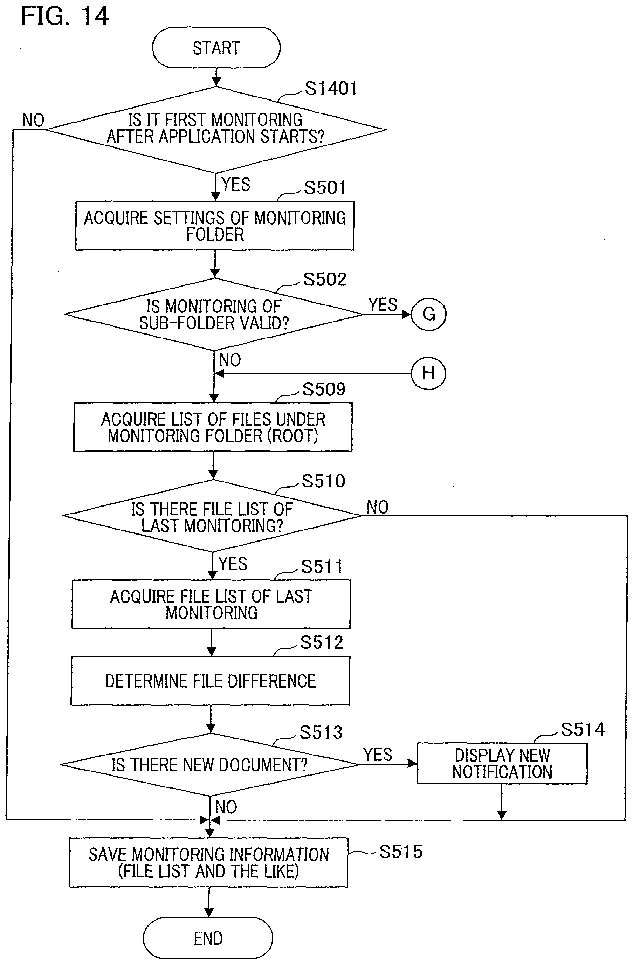

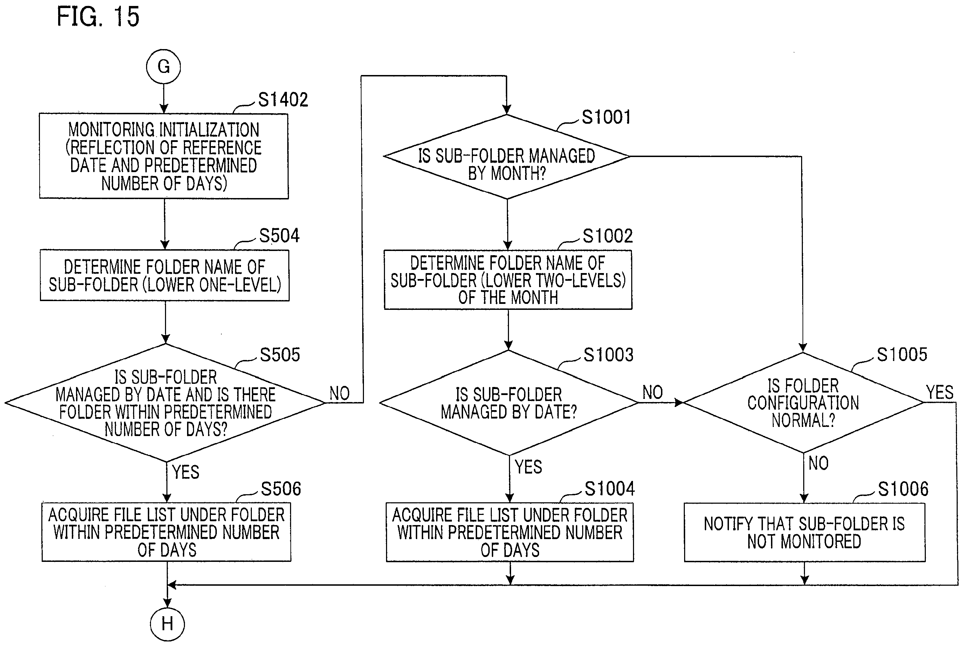

Hereinafter, using flowcharts of Figs. 14 and 15, a difference from the second embodiment will be described. Processing unless otherwise specified is all the same as in the second embodiment.
Figs. 14 and 15 are diagrams each showing an example of a flowchart according to first monitoring processing after the start-up of the file monitoring application 300. The processing begins at the start-up of the file monitoring application 300. The processing is first monitoring processing after the start-up and, after the processing is executed, the regular monitoring processing shown in the above-described embodiments is executed. Basic monitoring processing is the same as the regular monitoring processing in the second embodiment.

In S1401, the management unit 301 determines whether there is first monitoring after the application start-up. A flag (a first monitoring flag) showing whether there is first monitoring is held as internal information of the application, and is set to execution end after a monitoring execution. It is possible to determine whether the monitoring is a first time by referencing the value. Then, if setting information of the monitoring folder is acquired in S501 and it is determined that monitoring of the sub-folder is valid in S502, the procedure proceeds to S1402. Processing in S501 and S502 are the same as in the second embodiment.

In S1402, the management unit 301 initializes monitoring processing to monitor from last monitoring up to now. Specifically, referencing an execution time of last monitoring recorded in S515, the reference date is set to a current date, and the predetermined number of days is set to the number of days from an execution date of the last monitoring to the current date. A file which has been vacant for a given period has a period set in advance in a case when notification is not necessary, and only files in a period when notification is necessary may be monitored. In this case, an upper limit of the given period is set to the predetermined number of days. Then, monitoring is executed using the set reference date and the predetermined number of days. S1001 and subsequent processing are the same as in the second embodiment.

According to the embodiment, it is possible to be notified of a file stored while the file monitoring application is not started.

### (Other Embodiments)

Embodiment (s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions.The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An information processing apparatus (101) comprising:
a determination means (301) for determining a folder satisfying a predetermined condition based on a current date and time;
a detection means (305) for detecting a change in a file stored in the folder determined to satisfy the predetermined condition by the determination means; and
a notification means (303) for notifying of the change in a file detected by the detection means.

2. The information processing apparatus according to claim 1,
wherein the determination means determines whether a folder name shows a date.

3. The information processing apparatus according to claim 2,
wherein, if the folder name shows a date, the determination means determines whether the date shown in the folder name is within a predetermined number of days from the current date and time, which is set to be monitored in advance.

4. The information processing apparatus according to claim 3,
wherein, if the folder name does not show a date, the determination means further determines whether the folder name shows a month, and
if the folder name is determined to show a month, it is determined whether a folder name at a lower level shows a date.

5. The information processing apparatus according to claim 3,
wherein the determination means determines whether a current time of the information processing apparatus is in the vicinity of a date change, and
if the current time is determined to be in the vicinity of the date change, the predetermined condition is changed based on the current time.

6. The information processing apparatus according to claim 5,
wherein, when the current time is before a date change, the determination means sets a range in which one day is added to the predetermined number of days set to be monitored in advance from a next day after the current date and time as the predetermined condition,
if the current time is after the date change, the determination means sets a range in which one day is added to the predetermined number of days set to be monitored in advance from the current date and time as the predetermined condition.

7. The information processing apparatus according to any one of claims 3 to 6,
wherein the determination means further determines whether there is first monitoring after start-up of a program for monitoring a file, and
if it is determined that there is the first monitoring after the start-up of the program for monitoring a file, time from a last monitoring execution to the current date and time is included in the predetermined number of days set to be monitored in advance.

8. The information processing apparatus according to any one of claims 1 to 7,
wherein the information processing apparatus further comprises a configuration determination means for determining whether a folder configuration is normal if a folder name does not show a date or a month,
the notification means notifies that a folder cannot be monitored, if the folder configuration is not normal, and
the notification means does not notify that a folder cannot be monitored if the folder configuration is normal.

9. The information processing apparatus according to claim 8,
wherein, if a folder is not created, the configuration determination means determines that the folder configuration is normal.

10. A file monitoring system including a server (102) for storing a file of received FAX data and the information processing apparatus (101) described in claim 1,
wherein the information processing apparatus (101) monitors a file stored by the server (102).

11. A control method of the information processing apparatus (101) comprising:
a determination step of determining a folder satisfying a predetermined condition based on a current date and time;
a detection step of detecting a change in a file stored in the folder determined to satisfy the predetermined condition in the determination step; and
a notification step of notifying of the change in a file detected in the detection step.

12. A control program causing a computer to perform each step of a control method of an information processing apparatus (101), the method comprising:
a determination step of determining a folder satisfying a predetermined condition based on a current date and time;
a detection step of detecting a change in a file stored in the folder determined to satisfy the predetermined condition in the determination step; and
a notification step of notifying of the change in a file detected in the detection step.

13. A computer-readable recording medium storing the control program described in claim 12.
